# EUROPÄISCHE PATENTSCHRIFT

(11) **EP 4 446 613 B1**
(45) Veröffentlichungstag und Bekanntmachung des Hinweises auf die Patenterteilung: **30.07.2025**
(21) Anmeldenummer: 24167333.4
(22) Anmeldetag: 28.03.2024
(51) Int. Cl.: F16G 13/16

(54) **ENERGIEFÜHRUNGSSYSTEM ZUR SICHERUNG EINER VERTIKAL HÄNGENDEN ENERGIEFÜHRUNGSKETTE**
ENERGY GUIDING SYSTEM FOR SECURING A VERTICALLY SUSPENDED ENERGY GUIDING CHAIN
SYSTÈME DE GUIDAGE D'ÉNERGIE DESTINÉ À SÉCURISER UNE CHAÎNE PORTE-CÂBLES SUSPENDUE VERTICALEMENT

(30) Priorität: 04.04.2023 DE 202023101716 U
(43) Veröffentlichungstag der Anmeldung: 16.10.2024
(73) Patentinhaber: Tsubaki Kabelschlepp GmbH, 57482 Wenden-Gerlingen (DE)
(72) Erfinder: Daub, Mark, 57555 Mudersbach (DE)
(74) Vertreter: Schwenderling, Jens

(56) Entgegenhaltungen:
- EP-B1- 2 561 248
- DE-U1- 9 117 220

## Beschreibung

Die vorliegende Erfindung betrifft ein Energieführungssystem zur Sicherung einer vertikal hängenden Energieführungskette.

Energieführungssysteme mit einer vertikal hängenden Energieführungskette zwischen einem ortsfesten Anschlussbereich und einem beweglichen Anschlussbereich sind in verschiedenen Ausführungen z.B. aus den Druckschriften EP 2 561 248 B1 oder DE 91 17 220 U1 bekannt und sind zum Führen von Leitungen, Kabeln, Schläuchen oder dergleichen geeignet und bestimmt. Die vertikal hängende Energieführungskette bildet zwischen dem ortsfesten Anschlussbereich und dem beweglichen Anschlussbereich einen Krümmungsbereich. Häufig werden Energieführungsketten zusätzlich in Führungskanälen geführt. Ein Führungskanal verhindert vor allem bei längeren Energieführungsketten, dass diese aus ihrer vorgesehenen Position bei Beschleunigung der Energieführungskette auspendeln und beschädigt werden oder Hindernisse beschädigen. Derartige Führungskanäle sind in verschiedenen Ausführungen bekannt.

Bei Beschleunigungen des Energieführungssystems kann sich ein geführtes Trum häufig dennoch aus dem Führungskanal heraus in Richtung des gegenüberliegenden Trums bewegen und mit anderen Bauteilen kollidieren. Bei einer zeitgleichen vertikalen Bewegung der Energieführungskette können dann beide Trums gegeneinander schlagen, wodurch starke Beschädigungen an der Energieführungskette und/oder anderen Bauteilen entstehen können bis hin zur Zerstörung des Energieführungssystems.

Hiervon ausgehend liegt der vorliegenden Erfindung die Aufgabe zugrunde, die aus dem Stand der Technik bekannten Probleme zumindest teilweise zu überwinden und die Energieführungskette sicherer im Führungskanal zu halten.

Diese Aufgabe wird gelöst mit dem Energieführungssystem gemäß dem Anspruch 1. Weitere vorteilhafte Ausgestaltungen sind in den abhängigen Ansprüchen angegeben.

Erfindungsgemäß wird ein Energieführungssystem vorgestellt, welches umfasst:
- einen Führungskanal,
- eine Energieführungskette,
- ein Fanghaken und
- ein Fanghakenhalter.

Der Führungskanal umfasst zwei zueinander parallele und vertikal angeordnete Seiten. Ein Trum einer Energieführungskette, welches in dem Führungskanal geführt wird, kann sich längs des Führungskanals frei bewegen. Jedoch wird die Bewegung in Richtung der Seiten des Führungskanals begrenzt. Die Seiten können insbesondere über eine Bodenplatte miteinander verbunden sein.

Die Energieführungskette ist vertikal hängend angeordnet und ist zum Führen von Leitungen, Kabeln, Schläuchen oder dergleichen geeignet. Die Energieführungskette weist zwischen einem ortsfesten ersten Anschlussbereich und einem beweglichen zweiten Anschlussbereich unter Ausbildung eines Krümmungsbereichs gelenkig miteinander verbundene Segmente auf. An einem beweglichen Anschlussbereich kann beispielsweise ein Mitnehmer angeordnet sein. Weiterhin ist die Energieführungskette zumindest teilweise zwischen dem Krümmungsbereich und dem ortsfesten Anschlussbereich im Führungskanal zwischen den Seiten geführt. Hierdurch wird verhindert, dass die Energieführungskette nach außen über die Seiten des Führungskanals ausbrechen kann.

Der Fanghaken ist mit einem Segment der Energieführungskette verbunden. Ein Abschnitt des Fanghakens ist auskragend über zumindest eine Seite des Führungskanals angeordnet. Der Fanghaken ist vorzugsweise auf der zum gegenüberliegenden Trum gerichteten Seite des Segments befestigt, beispielsweise auf einem Steg zwischen zwei Seiten des Segments.

Der Fanghakenhalter weist einen Freiraum auf. Der Freiraum ist außen neben einer der Seiten des Führungskanals in Richtung des gegenüberliegenden Trums ausgebildet. Weiterhin erstreckt sich der Freiraum in vertikaler Richtung von einer Eintrittsöffnung aus nach unten. Dabei ragt der Fanghakenhalter insbesondere nicht über die Seiten hinaus in den Führungskanal.

Fanghaken und Fanghakenhalter sind so zueinander angeordnet, dass der Fanghaken in den Freiraum des Fanghakenhalters in einer Position eingreift. Der Freiraum ist in vertikaler Richtung von einer Eintrittsöffnung aus nach unten erstreckt, so dass vorzugsweise ein Positionsbereich vorliegt, in dem der Fanghaken in den Fanghakenhalter eingreift. Der Fanghakenhalter ist vorzugsweise ein horizontaler Bügel mit einer Eintrittsöffnung parallel zu einer Seite des Führungskanals. Durch Zusammenwirken des Fanghakens und des Fanghakenhalters ist eine Bewegung des Segments in Richtung des gegenüberliegenden Trums lediglich innerhalb des Freiraums zulässig. Durch die Anordnung von Fanghaken und Fanghakenhalter in dieser Position wird erreicht, dass das Segment der Energieführungskette und damit ein Bereich der Energieführungskette sicher und zuverlässig im Führungskanal gehalten wird.

Wird der bewegliche Anschlussbereich der Energieführungskette vertikal nach oben bewegt, kann das Segment, an welchem der Fanghaken befestigt ist, Teil des Krümmungsbereichs werden und bei weiterer Bewegung des beweglichen Anschlussbereichs Teil des gegenüberliegenden Trums werden. Durch diese Bewegung kann sich das Segment zusammen mit dem Fanghaken zunächst nach oben bewegen und anschließend in Richtung des gegenüberliegenden Trums bewegen. Durch eine Aufwärtsbewegung des Segments, an dem der Fanghaken befestigt ist, wird der Fanghaken vom Fanghakenhalter getrennt, so dass der Fanghaken nicht mehr in den Freiraum des Fanghakenhalters fasst.

Das Energieführungssystem ist vorzugsweise für ein Hochregallager eingerichtet, insbesondere für einen automatisches Hochregallagersystem. Die hierin beschriebenen Vorteile können aber allgemein in allen Anwendungen erzielt werden, in welchen eine vertikal hängende Energieführungskette eingesetzt wird. Das Energieführungssystem ist zur Sicherung der Energieführungskette in einem Führungskanal bei hohen auftretenden Beschleunigungen eingerichtet.
In einer bevorzugten Ausführungsform ist der Fanghakenhalter form- und/ oder kraftschlüssig mit einer Seite des Führungskanals verbunden.

Diese Ausführungsform dient dazu, den Fanghakenhalter möglichst sicher und variabel an der Seite des Führungskanals zu befestigen.

In einer weiteren bevorzugten Ausführungsform ist der Fanghaken auf beiden Seiten der Energieführungskette seitlich insbesondere symmetrisch nach außen über den Führungskanal auskragend.

In dieser Ausführungsform kann der Fanghakenhalter variabel auf eine der Seiten des Führungskanals von außen angebracht werden. Dies ist insbesondere von Vorteil, wenn auf einer Seite nicht genügend Arbeitsraum zum Befestigen des Fanghakenhalters vorhanden ist.

In einer weiteren bevorzugten Ausführungsform ist ein weiterer Fanghakenhalter auf der gleichen Höhe gegenüberliegend zum Fanghakenhalter ausgebildet.

Eine Bewegung der Energieführungskette aus dem Führungskanal heraus kann in dieser Ausführungsform gleichmäßig über die beiden Fanghakenhalter im Zusammenspiel mit dem Fanghaken verhindert werden. Hierdurch kann die Last auf den einzelnen Fanghakenhalter reduziert werden und möglicher Verschleiß der Bauteile reduziert werden. Gleichzeitig kann die Energieführungskette sicher im Führungskanal gehalten werden.

In einer weiteren bevorzugten Ausführungsform wird diese Ausführungsform mit der vorherigen kombiniert.

In einer weiteren bevorzugten Ausführungsform bilden Fanghaken und Fanghakenhalter eine Baueinheit, wobei mehrere Baueinheiten durch mindestens ein Segment voneinander beabstandet sind.

Diese Ausführungsform dient dazu, die Energieführungskette entlang des Führungskanal sicher im Führungskanal zu halten. Vorzugsweise sind mehrere Baueinheiten vorteilhaft vertikal entlang des Führungskanals verteilt. Bevorzugt ist eine Ausgestaltung, in der mehrere Baueinheiten jeweils maximal 1 m, insbesondere maximal 10 m, vertikal voneinander beabstandet sind.

In einer weiteren bevorzugten Ausführungsform wird der Freiraum durch ein Anschlagelement begrenzt, welches den Freiraum in Richtung des gegenüberliegenden Trums zumindest teilweise begrenzt und der Abstand des Anschlagelements vom Führungskanal betragsmäßig kleiner ist als die Führungskanaltiefe.

Diese Ausführungsform ist besonders vorteilhaft, damit das Segment mit dem Fanghaken trotz eines begrenzten Freiraums sich nicht vollständig aus dem Führungskanal heraus bewegen kann. Denn falls das Segment sich vollständig oberhalb der Seite des Führungskanals befindet, verliert der Führungskanal seine seitlich begrenzende Wirkung für dieses Segment.

In einer weiteren bevorzugten Ausführungsform gibt eine Kennzeichnung an Fanghaken und Fanghakenhalter eine vertikale Position des Fanghakenhalters am Führungskanal an.

Diese Ausführungsform hilft dabei, eine einfachere und sichere Montage des Fanghakenhalters am Führungskanal zu ermöglichen. So kann durch eine Kennzeichnung angegeben werden, in welcher Höhe der Fanghakenhalter angebracht werden soll für einen zerstörungsfreien Betrieb.

In einer weiteren bevorzugten Ausführungsform weisen die Seiten des Führungskanals von außen vertikale und/ oder horizontale Profilnuten auf und der Fanghakenhalter greift über mehrere Befestigungselemente in die Profilnuten.

Durch diese Ausführungsform kann der Fanghakenhalter zuverlässig und in einfacher Weise sowie variable positionierbar am Führungskanal befestigt werden.

In einer weiteren bevorzugten Ausführungsform reicht der Führungskanal vorzugsweise von dem ortsfesten Anschlussbereich bis zum unteren Ende des Krümmungsbereichs.

In dieser Ausführungsform kann sichergestellt werden, dass das Trum der Energieführungskette bis zur untersten Position des beweglichen Anschlussbereichs im Führungskanal geführt ist.
Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine perspektivische Ansicht des Energieführungssystems,
- Fig. 2:: eine Seitenansicht des Energieführungssystems aus Fig. 1,
- Fig. 3:: eine Draufsicht eines Energieführungssystems aus Fig. 1,
- Fig. 4:: eine schematische Schnittansicht eines Segments der Energieführungskette und des Führungskanals aus Fig.1,
- Fig. 5:: eine schematische Schnittansicht eines Segments der Energieführungskette und des Führungskanals in einer weiteren Ausführungsform.

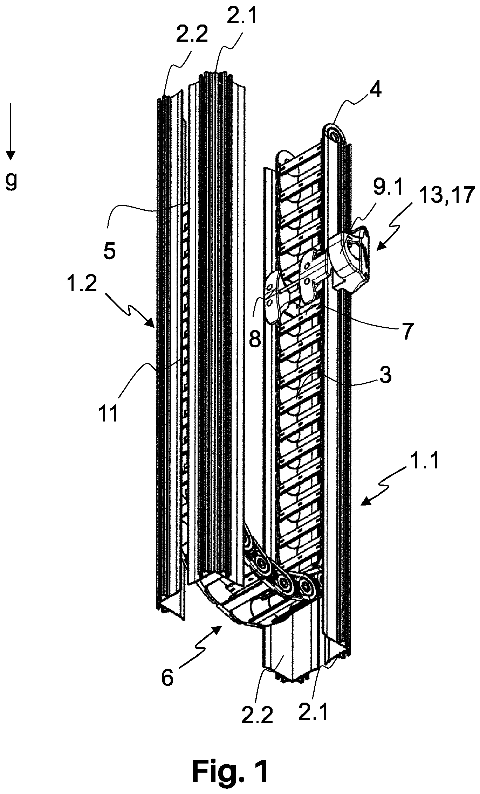

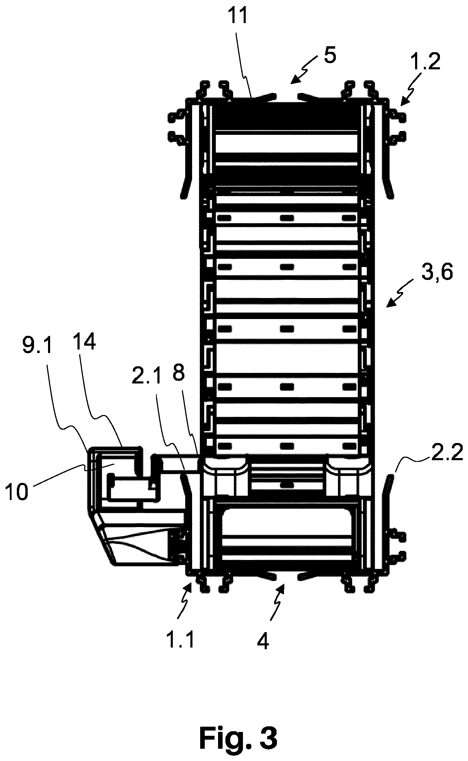

Fig. 1 zeigt einen Teil eines Energieführungssystems, welches einen Führungskanal 1.1, eine Energieführungskette 3, einen Fanghaken 8 und einen Fanghakenhalter 9.1 umfasst. Der Führungskanal 1.1 ist durch zwei parallele zueinander und vertikal angeordnete Seiten 2.1; 2.2 gebildet. Die Energieführungskette 3 ist vertikal hängend angeordnet und weist zwischen einem ortsfesten ersten Anschlussbereich 4 und einem beweglichen zweiten Anschlussbereich 5 unter Ausbildung eines Krümmungsbereichs 6 gelenkig miteinander verbundene Segmente 7 auf. Die Energieführungskette 3 ist teilweise zwischen dem Krümmungsbereich 6 und dem ortsfesten ersten Anschlussbereich 4 im Führungskanal 1.1 zwischen den Seiten 2.1; 2.2 geführt. Weiterhin ist die Energieführungskette 3 teilweise zwischen dem Krümmungsbereich 6 und dem beweglichen zweiten Anschlussbereich 5 im Führungskanal 1.2 zwischen den Seiten 2.1; 2.2 geführt. Der Fanghaken 8 ist mit einem Segment 7 verbunden. Ein Abschnitt des Fanghakens 8 ist auskragend über die Seite 2.1 des Führungskanals 1.1 angeordnet. Die Energieführungskette 3 ist in einer Position 13 dargestellt, in der Fanghaken 8 in einen Fanghakenhalter 9.1 eingreift. Der Fanghaken 8 und der Fanghakenhalter 9.1 bilden zusammen eine Baueinheit 17. Eine Ausgestaltung des Fanghakenhalters 9.1 wird in Fig. 3 bis Fig. 5 näher erläutert.

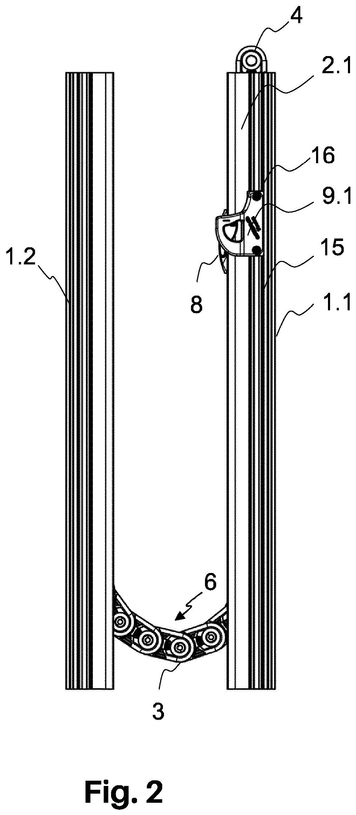

Fig. 2 zeigt einen Teil eines Energieführungssystems aus Fig. 1 in einer Seitenansicht. Der Fanghakenhalter 9.1 ist form- und kraftschlüssig mit der Seite 2.1 des Führungskanals 1.1 verbunden. Hierfür weist die Seite 2.1 des Führungskanals 1.1 von außen vertikale Profilnuten 15 auf und der Fanghakenhalter 9.1 greift über mehrere Befestigungselemente 16 in die Profilnuten 15.

Fig. 3 zeigt einen Teil eines Energieführungssystems aus Fig. 1 in einer Draufsicht. Zwischen dem ortsfesten ersten Anschlussbereich 4 und dem beweglichen zweiten Anschlussbereich 5 weist die Energieführungskette 3 den Krümmungsbereich 6 auf. Der Fanghakenhalter 9.1 weist den Freiraum 10 auf, welcher außen neben der Seite 2.1 des Führungskanals 1.1 in Richtung des gegenüberliegenden Trums 11 ausgebildet ist. Der Freiraum 10 für den Fanghaken 8 wird durch ein Anschlagelement 14 in Richtung des gegenüberliegenden Trums 11 begrenzt. Dadurch wird die Energieführungskette 3 sicher im Führungskanal 1.1 gehalten.

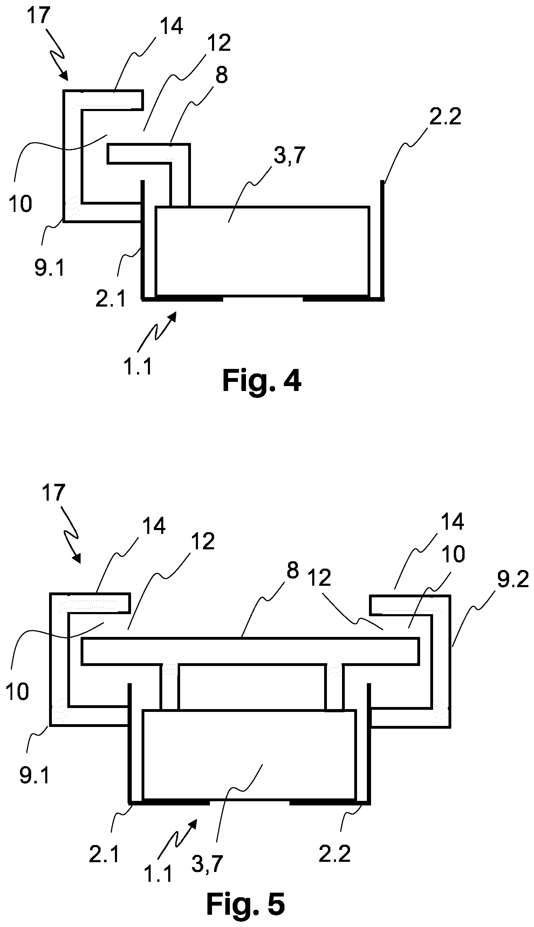

Fig. 4 zeigt eine schematische Schnittansicht des Segments 7 der Energieführungskette 3 und des Führungskanals 1.1 aus Fig.1. Der Fanghaken 8 ist mit dem Segment 7 verbunden. Fanghaken 8 und Fanghakenhalter 9.1 bilden zusammen die Baueinheit 17. Der Fanghakenhalter 9.1 weist den Freiraum 10 auf, welcher außen neben der Seite 2.1 des Führungskanals 1.1 in Richtung des gegenüberliegenden Trums 11 ausgebildet ist und welcher sich in vertikaler Richtung von einer Eintrittsöffnung 12 nach unten erstreckt, wobei der Fanghaken 8 in den Freiraum 10 des Fanghakenhalters 9.1 eingreift. Der Freiraum 10 wird durch ein Anschlagelement 14 begrenzt, welches den Freiraum 10 in Richtung des gegenüberliegenden Trums 11 begrenzt. Der Abstand des Anschlagelements 14 vom Führungskanal 1.1 ist kleiner als die Führungskanaltiefe.

Fig. 5 zeigt eine schematische Schnittansicht eines Segments 7 der Energieführungskette 3 und des Führungskanals 1.1 in einer weiteren Ausführungsform. Der Fanghaken 8 ist mit dem Segment 7 verbunden, wobei der Fanghaken 8 auf beiden Seiten 2.1; 2.2 der Energieführungskette 3 seitlich symmetrisch nach außen über den Führungskanal 1.1 auskragend ist. Zusätzlich ist ein weiterer Fanghakenhalter 9.2 auf der gleichen Höhe gegenüberliegend zum Fanghakenhalter 9.1 ausgebildet. Der Fanghakenhalter 9.2 weist den Freiraum 10 auf, welcher außen neben der Seite 2.2 des Führungskanals 1.1 in Richtung des gegenüberliegenden Trums 11 ausgebildet ist und welcher sich in vertikaler Richtung von einer Eintrittsöffnung 12 nach unten erstreckt, wobei der Fanghaken 8 in den Freiraum 10 des Fanghakenhalters 9.2 eingreift. Der Freiraum 10 wird durch ein Anschlagelement 14 begrenzt, welches den Freiraum 10 in Richtung des gegenüberliegenden Trums 11 begrenzt. Der Abstand des Anschlagelements 14 vom Führungskanal 1.1 ist kleiner als die Führungskanaltiefe. In der gezeigten Ausführungsform kann die Last auf den einzelnen Fanghakenhalter 9.1; 9.2 reduziert werden und möglicher Verschleiß der Bauteile reduziert werden. Gleichzeitig kann die Energieführungskette 3 sicher im Führungskanal 1.1 gehalten werden.

### Bezugszeichenliste

- 1.1; 1.2: Führungskanal
- 2.1; 2.2: Seiten des Führungskanals
- 3: Energieführungskette
- 3.1: festes Trum
- 4: erster ortsfester Anschlussbereich
- 5: zweiter beweglicher Anschlussbereich
- 6: Krümmungsbereich
- 7: Segment
- 8: Fanghaken
- 9.1; 9.2: Fanghakenhalter
- 10: Freiraum
- 11: bewegliches Trum
- 12: Eintrittsöffnung
- 13: Position
- 14: Anschlagelement
- 15: Profilnut
- 16: Befestigungselement
- 17: Baueinheit

## Patentansprüche

1. Energieführungssystem umfassend
a) einen Führungskanal (1.1),
wobei dieser durch zwei parallele zueinander und vertikal angeordnete Seiten (2.1, 2.2) gebildet ist,
b) eine vertikal hängende Energieführungskette (3),
wobei die Energieführungskette (3) ein festes Trum (3.1), ein bewegliches Trum (11) und zwischen einem ersten ortsfesten Anschlussbereich (4) und einem zweiten beweglichen Anschlussbereich (5) unter Ausbildung eines Krümmungsbereichs (6) gelenkig miteinander verbundene Segmente (7) aufweist, wobei das feste Trum (3.1) zwischen dem ersten ortsfesten Anschlussbereich (4) und dem Krümmungsbereich (6) angeordnet ist, wobei das bewegliche Trum (11) zwischen dem zweiten beweglichen Anschlussbereich (5) und dem Krümmungsbereich (6) angeordnet ist und das feste Trum (3.1) zumindest teilweise zwischen dem Krümmungsbereich (6) und dem ersten ortsfesten Anschlussbereich (4) im Führungskanal (1.1) zwischen den Seiten (2.1, 2.2) geführt ist,
c) einen Fanghaken (8),
wobei der Fanghaken (8) mit einem Segment (7) verbunden ist und wobei ein Abschnitt des Fanghakens (8) über zumindest eine Seite (2.1, 2.2) des Führungskanals (1.1) auskragend angeordnet ist, und
d) einen Fanghakenhalter (9.1),
**dadurch gekennzeichnet, dass** der Fanghakenhalter (9.1) einen Freiraum (10) aufweist, welcher außen neben einer der Seiten (2.1, 2.2) des Führungskanals (1.1) in Richtung des gegenüberliegenden beweglichen Trums (11) ausgebildet ist und welcher sich in vertikaler Richtung von einer Eintrittsöffnung (12) nach unten erstreckt, wobei in einer Position (13) der Fanghaken (8) in den Freiraum (10) des Fanghakenhalters (9.1) eingreift.

2. Energieführungssystem nach Anspruch 1, wobei der Fanghakenhalter (9.1) form- und/ oder kraftschlüssig mit einer Seite (2.1, 2.2) des Führungskanals (1.1) verbunden ist.

3. Energieführungssystem nach einem der vorherigen Ansprüche, wobei der Fanghaken (8) auf beiden Seiten der Energieführungskette (3) seitlich insbesondere symmetrisch nach außen über den Führungskanal (1.1) auskragend ist.

4. Energieführungssystem nach einem der vorherigen Ansprüche, wobei ein weiterer Fanghakenhalter (9.2) auf der gleichen Höhe gegenüberliegend zum Fanghakenhalter (9.1) ausgebildet ist.

5. Energieführungssystem nach einem der vorherigen Ansprüche, wobei Fanghaken (8) und Fanghakenhalter (9.1, 9.2) eine Baueinheit (17) bilden, wobei mehrere Baueinheiten (17) durch mindestens ein Segment (7) voneinander beabstandet sind.

6. Energieführungssystem nach einem der vorherigen Ansprüche, wobei der Freiraum (10) durch ein Anschlagelement (14) begrenzt wird, welches den Freiraum (10) in Richtung des gegenüberliegenden beweglichen Trums (11) zumindest teilweise begrenzt und der Abstand des Anschlagelements (14) vom Führungskanal (1.1) betragsmäßig kleiner ist als die Führungskanaltiefe.

7. Energieführungssystem nach einem der vorherigen Ansprüche, wobei eine Kennzeichnung an Fanghaken (8) und Fanghakenhalter (9.1, 9.2) eine vertikale Position des Fanghakenhalters (9.1, 9.2) am Führungskanal (1.1) angibt.

8. Energieführungssystem nach Anspruch 2, wobei die Seiten (2.1, 2.2) des Führungskanals (1) von außen vertikale und/ oder horizontale Profilnuten (15) aufweisen und der Fanghakenhalter (9.1) über mehrere Befestigungselemente (16) in die Profilnuten (15) greift.

## Claims

1. Power conducting system comprising
a) a guide channel (1.1),
wherein the latter is formed by two mutually parallel and vertically disposed sides (2.1, 2.2),
b) a vertically suspended power track chain (3),
wherein the power track chain (3) has a fixed strand (3.1), a movable strand (11), and segments (7) which are connected to one another in an articulated manner while forming a curvature region (6) between a first stationary connection region (4) and a second movable connection region (5), wherein the fixed strand (3.1) is disposed between the first stationary connection region (4) and the curvature region (6), wherein the movable strand (11) is disposed between the second movable connection region (5) and the curvature region (6), and the fixed strand (3.1) between the curvature region (6) and the first stationary connection region (4) is at least partially guided in the guide channel (1.1) between the sides (2.1, 2.2),
c) a catch hook (8),
wherein the catch hook (8) is connected to a segment (7) and wherein a portion of the catch hook (8) is disposed so as to protrude beyond at least one side (2.1, 2.2) of the guide channel (1.1), and
d) a catch hook holder (9.1),
**characterized in that**
the catch hook holder (9.1) has a clearance (10) which is formed on the outside next to one of the sides (2.1, 2.2) of the guide channel (1.1) in the direction of the opposite movable strand (11), and which extends in the vertical direction from an entry opening (12) downwards, wherein the catch hook (8) in one position (13) engages in the clearance (10) of the catch hook holder (9.1).

2. Power conducting system according to Claim 1, wherein the catch hook holder (9.1) is connected in a form-fitting and/or a force-fitting manner with one side (2.1, 2.2) of the guide channel (1.1).

3. Power conducting system according to one of the preceding claims, wherein the catch hook (8) protrudes laterally, in particular symmetrically, outwards beyond the guide channel (1.1) on both sides of the power track chain (3).

4. Power conducting system according to one of the preceding claims, wherein a further catch hook holder (9.2) is formed at the same level opposite the catch hook holder (9.1).

5. Power conducting system according to one of the preceding claims, wherein the catch hook (8) and the catch hook holder (9.1, 9.2) form a functional group (17), wherein a plurality of functional groups (17) are spaced from one another by at least one segment (7).

6. Power conducting system according to one of the preceding claims, wherein the clearance (10) is delimited by a stop element (14) which at least partially delimits the clearance(10) in the direction of the opposite movable strand (11), and the spacing of the stop element (14) from the guide channel (1.1) is less than the depth of the guide channel.

7. Power conducting system according to one of the preceding claims, wherein a marking on the catch hook (8) and the catch hook holder (9.1, 9.2) indicates a vertical position of the catch hook holder (9.1, 9.2) on the guide channel (1.1).

8. Power conducting system according to Claim 2, wherein the sides (2.1, 2.2) of the guide channel (1) externally have vertical and/or horizontal profile grooves (15), and the catch hook holder (9.1) engages in the profile grooves (15) by way of a plurality of fastening elements (16).

## Revendications

1. Système de guidage d'énergie comprenant
a) un canal de guidage (1.1),
celui-ci étant formé par deux côtés (2.1, 2.2) parallèles entre eux et agencés verticalement,
b) une chaîne de guidage d'énergie (3) suspendue verticalement,
la chaîne de guidage d'énergie (3) présentant un brin fixe (3.1), un brin mobile (11) et des segments (7) reliés entre eux de manière articulée entre une première zone de raccordement fixe (4) et une deuxième zone de raccordement mobile (5) en réalisant une zone de courbure (6), le brin fixe (3.1) étant agencé entre la première zone de raccordement fixe (4) et la zone de courbure (6), le brin mobile (11) étant agencé entre la deuxième zone de raccordement mobile (5) et la zone de courbure (6) et le brin fixe (3.1) étant guidé au moins en partie entre la zone de courbure (6) et la première zone de raccordement fixe (4) dans le canal de guidage (1.1) entre les côtés (2.1, 2.2),
c) un crochet d'arrêt (8),
le crochet d'arrêt (8) étant relié à un segment (7) et une section du crochet d'arrêt (8) étant agencée en saillie au-dessus d'au moins un côté (2.1, 2.2) du canal de guidage (1.1), et
d) un support de crochet d'arrêt (9.1),
**caractérisé en ce que**
le support de crochet d'arrêt (9.1) présente un espace libre (10) qui est réalisé à l'extérieur, à côté d'un des côtés (2.1, 2.2) du canal de guidage (1.1) en direction du brin mobile opposé (11) et qui s'étend vers le bas dans la direction verticale à partir d'une ouverture d'entrée (12), le crochet d'arrêt (8) s'engageant dans l'espace libre (10) du support de crochet d'arrêt (9.1) dans une position (13).

2. Système de guidage d'énergie selon la revendication 1, dans lequel le support de crochet d'arrêt (9.1) est relié par complémentarité de forme et/ou par adhérence à un côté (2.1, 2.2) du canal de guidage (1.1).

3. Système de guidage d'énergie selon l'une quelconque des revendications précédentes, le crochet d'arrêt (8) faisant saillie latéralement, notamment symétriquement vers l'extérieur, au-delà du canal de guidage (1.1) des deux côtés de la chaîne de guidage d'énergie (3).

4. Système de guidage d'énergie selon l'une quelconque des revendications précédentes, dans lequel un autre support de crochet d'arrêt (9.2) est réalisé à la même hauteur en face du support de crochet d'arrêt (9.1).

5. Système de guidage d'énergie selon l'une quelconque des revendications précédentes, dans lequel les crochets d'arrêt (8) et les supports de crochets d'arrêt (9.1, 9.2) forment une unité structurelle (17), plusieurs unités structurelles (17) étant espacées les unes des autres par au moins un segment (7).

6. Système de guidage d'énergie selon l'une quelconque des revendications précédentes, dans lequel l'espace libre (10) est délimité par un élément de butée (14) qui délimite au moins partiellement l'espace libre (10) en direction du brin mobile opposé (11) et la distance entre l'élément de butée (14) et le canal de guidage (1.1) est inférieure à la profondeur du canal de guidage.

7. Système de guidage d'énergie selon l'une quelconque des revendications précédentes, dans lequel un marquage sur les crochets d'arrêt (8) et les supports de crochets d'arrêt (9.1, 9.2) indique une position verticale du support de crochets d'arrêt (9.1, 9.2) sur le canal de guidage (1.1).

8. Système de guidage d'énergie selon la revendication 2, dans lequel les côtés (2.1, 2.2) du canal de guidage (1) présentent, depuis l'extérieur, des rainures profilées verticales et/ou horizontales (15) et le support de crochet d'arrêt (9.1) s'engage dans les rainures profilées (15) par l'intermédiaire de plusieurs éléments de fixation (16).
